Europäisches Patentamt

(19) European Patent Office

Office européen des brevets

(11) Publication number:

**0 055 036**
A2

# (12) EUROPEAN PATENT APPLICATION

(21) Application number: **81305669.4**

(22) Date of filing: **02.12.81**

(51) Int. Cl.³: **B 32 B 15/08,** B 65 D 65/40,
B 32 B 31/20

(30) Priority: **22.12.80 US 218947**

(71) Applicant: **AMERICAN CAN COMPANY, American Lane,
Greenwich, Connecticut 06830 (US)**

(43) Date of publication of application: **30.06.82
Bulletin 82/26**

(72) Inventor: **Krueger, Duane A., 1422 Ridgeway Drive,
Neenah Wisconsin, 54956 (US)**

(84) Designated Contracting States: **AT BE CH DE FR GB IT
LI LU NL SE**

(74) Representative: **Harvey, David G. et al, Graham Watt &
Co. Riverhead, Sevenoaks Kent TN13 2BN (GB)**

㊼ **Multi-layer packaging material and process for making it.**

(57) The packaging material comprises five layers bonded
face-to-face, the layers in sequence being a biaxially-oriented
rupture-resistant layer (18), an adhesive layer (16), an alumini-
um foil (14), a polyolefine layer (12) modified by a fused ring or-
ganic acid anhydride and a polyolefine heat sealable layer (10).
Production of the packaging material first involves coextruding
a deuplex film comprising layers (10) and (12). This film is then
bonded to one side of the aluminium foil (14) in a roll nip under
heat and pressure, the foil being brought into contact with the
anhydride-modified layer (12). Finally, the foil-embodying lami-
nate is completed by bonding the biaxially-oriented layer (18)
to the exposed other surface of the foil (14) using an adhesive
layer for instance comprising a polyester urethane.

ACTORUM AG

"MULTI-LAYER PACKAGING MATERIAL AND PROCESS FOR MAKING IT"

The present invention relates to multi-layer packaging material and process for making it.

In more specific terms, this invention is directed at laminate structures particularly suitable for use under retort conditions and their manufacture.

The packaging industry has expended enormous sums of money over many years attempting to develop and commercialize retortable pouches, yet problems still remain unsolved.

A typical retort pouch is made of laminate structures placed face-to-face and sealed together along three sides before filling. They are sealed along the fourth side after filling. The sealed pouches usually are heated or retorted after final sealing to cook the contents of the pouch and to kill or sterilise all organisms within the pouch.

A significant problem encountered in development of retort pouches has arisen in the course of the construction of the multiple layer laminate structure from which the pouches are formed. Typical laminate structures comprise an aluminium foil, a polyester layer adhesively attached to one side of the foil, frequently by means of a polyester urethane adhesive, and a sealable layer attached to the opposite side of the foil.

To obtain structural integrity, the aluminium foil could be attached to the seal layer in the same manner as it is attached to the polyester layer, namely by a polyester urethane adhesive. However, the use of polyester urethanes inwardly of the impervious foil layer have not been approved by governmental authorities because of possible contamination of the contained food. Therefore, for retort pouches for enclosing food, a primer of maleic anhydride polymer grafted onto polypropylene is conventionally coated on the second surface of the aluminium foil, and then it is heat-cured in line with the coating operation. Such coating materials are commercially known and available under the trade names Hercorprime and Morprime. An inner seal layer of polypropylene may then be attached to the primer at high temperatures of the order of 500° Fahrenheit (260°C). Unfortunately, the heating of the polypropylene seal layer to such a high temperature appears to oxidize its surface, and this increases the difficulty of sealing to form the pouch.

In a recent development, a separate layer of polypropylene is extruded into a combining nip between a previously formed seal layer of polypropylene and the cured primer, to form an adhesive layer. While this recent development appears to have solved the heat sealing problem, the cost of production of the pouch structure renders it uncompetitive relative to other packaging structures.

In this recent development, production of the laminate requires six steps. These steps are:

(1) coat foil with primer liquid

(2) evaporate primer solvent

(3) cure primer in oven

(4) adhesively laminate unprimed side of foil to polyester

(5) extrude sealant layer

(6) extrusion laminate the final structure together.

The present invention aims to reduce the number of processing steps involved in making laminates suitable for use in retortable pouches and to reduce in-machine and between-machine handling of unsupported metal foil.

The invention provides a process for making a multi-layer packaging material, characterised by the steps of coextruding a plural layer film from a first layer comprising a polyolefinic material modified with a fused ring acid anhydride and an adjoining second, layer of polyolefinic material layer; drawing the coextruded film and an unprimed metal e.g. aluminium foil into and through a nip between rolls, with the modified polyolefinic layer being in face-to-face relation with the foil; and applying heat and pressure for a duration adequate to adhere the foil to the coextruded film at the interface between the foil and the modified polyolefinic layer, the pressure being applied at the nip, and heat being applied during contact of the multiple material with the rolls.

Aslo provided by the invention is a packaging process comprising the steps of producing a packaging material by the process defined in the last paragraph adhesively bonding a biaxially-oriented tear resistant polymeric film to the foil, forming a pouch from the multi-layer structure, introducing a product into the pouch, closing and sealing the pouch, and heating the filled and sealed pouch under retort conditions of at least 100°C for at least 5 minutes, thereby to increase the strength of adhesion between the foil and the modified polyolefinic first layer.

The invention further provides a multi-layer packaging structure wherein the layers are interfacially adhered one to another, characterised by the layers in order comprising a biaxially oriented, abuse resistant layer, an adhesive layer, metal foil, a polyolefine layer modified with a fused ring organic acid anhydride and a polyolefine seal layer.

The coextruded film produced in the first step of the process can have as one outside layer polypropylene modified with a fused ring organic acid anhydride, and the layer adjoining the modified polypropylene layer can be polypropylene. After bonding this coextruded film to an unprimed aluminium foil in the nip of the rolls, through the use of effective amounts of heat and pressure over effective periods of time respectively, a biaxially oriented polyester film is adhesively bonded to the exposed surface of the aluminium foil.

Desirably, the polyolefinic material in the layers forming the coextruded film is a copolymer of propylene and ethylene containing up to about 20% ethylene, but preferably not more than 8%.

One way of carrying out the invention is now described in detail, by way of example only, with reference to the accompanying drawings, in which:

FIGURE 1 shows a retort pouch constructed according to the invention sealed around three edges and ready for filling,

FIGURE 2 is a cross-section, with thicknesses exaggerated, of a laminate structure in accordance with this invention, and

FIGURE 3 shows a 3-layer laminate subassembly of this invention being produced.

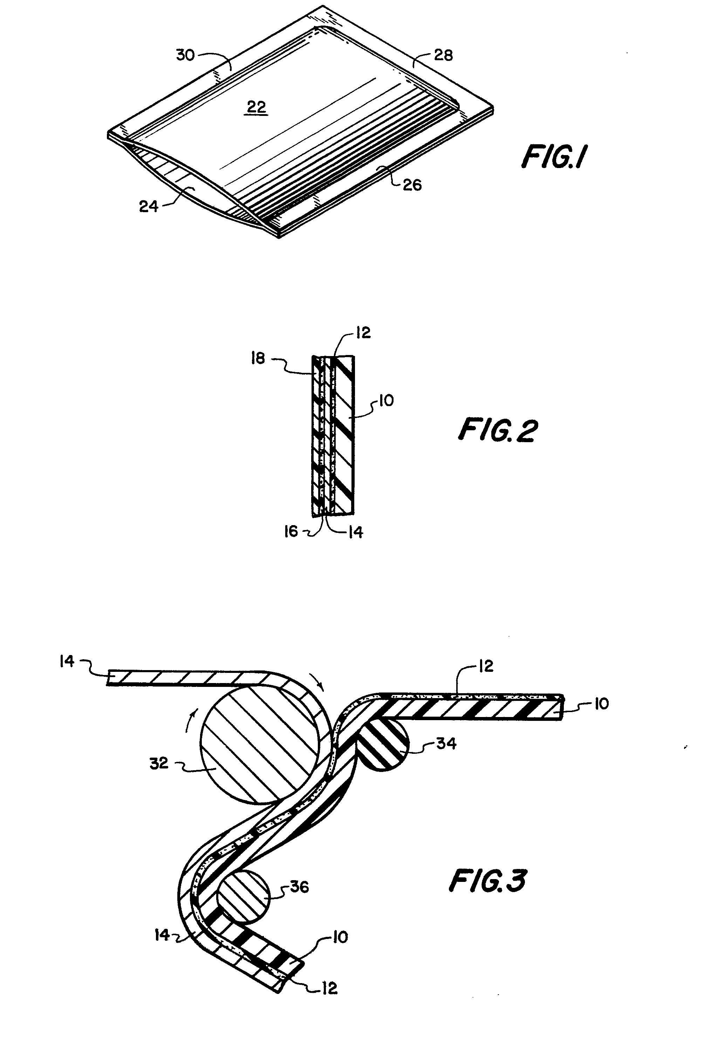

FIGURE 1 shows a retort pouch embodying the invention, which has substantially identical top and bottom walls 22 and 24 sealed together along three edges of the pouch 26, 28 and 30. The pouch is open along its fourth edge to receive a product. After the product is placed in the pouch, the fourth edge is sealed, and then the product-containing pouch is heated or retorted, as may be desired for the product contained in the pouch.

The laminated structure used for each of the walls 22 and 24 is shown in FIGURE 2. The inside or seal layer 10 is the layer that contacts the product, and is required to be capable of sealing to itself. Layer 10 is attached by layer 12 to an aluminium or other metal foil 14. The laminate further has a biaxially oriented polyester layer 18 attached by an adhesive layer 16 to the foil 14. The layer 18 will form the exterior of a pouch made from the laminate. Its function is to physically protect the foil from being penetrated or otherwise physically damaged.

The layer 10 is an extrusion grade polypropylene or polypropylene copolymer or a polypropylene polyethylene blend. One acceptable material is propylene ethylene copolymer sold by Hercules Chemical Company as SA-752.

The layer 12 is a polypropylene based polymer, and may contain polypropylene homopolymer, ethylene propylene copolymer or a blend of polypropylene and polyethylene, or may be a mixture of any of these polymeric compositions, with the total weight percent ethylene in the layer 12 not to exceed about 8%, for the layer 12 to function properly within the laminate under retort conditions.

A further component in layer 12 is a fused ring organic acid anhydride. The acid anhydride is preferably present as a moiety chemically grafted onto the polypropylene as a graft copolymer. It may alternatively be blended into the polymer material of layer 12.

The amount of acid anhydride combined with the polymer is quite variable. Broadly speaking, the invention may be successfully carried out with an acid anhydride content of 0.01% to 3% by weight of the total polymer. Preferably, the amount of acid anhydride is 0.07% to 0.43% by weight. One material acceptable for use directly as the composition of layer 12 is sold by Mitsui Petrochemical Industries as Admer QF-500. Another acceptable composition may be obtained by mixing together 5% to 30% of Hercoprime 70% to 95% of SA-752 propylene ethylene copolymer, both these polymers being sold by Hercules Chemical Company. Hercoprime is a graft copolymer of maleic anhydride onto a polypropylene backbone. The Hercoprime may additionally include about 3% ethylene vinyl acetate. SA-752 contains 4% ethylene.

The steps according to the invention in constructing the laminate shown in FIGURE 2 are best illustrated in FIGURE 3. In the initial step, layers 10 and 12 are coextruded and wound up. In the second step, the coextruded film and aluminium foil 14 are pulled into the hot nip between rolls 32 and 34. The combination of heat and pressure in the hop nip is effective to activate adhesion between the foil 14 and the modified polypropylene layer 12. Heat may be applied to the three layer structure after exiting the nip itself by wrapping the exiting structure around a substantial part of the surface of heated roll 32. The foil serves as a convenient and efficient conductor of heat from roll 32 to the interface of the foil with layer 12.

Roll 32 is steel and is heated by hot oil. Its temperature is controlled from about 350°F (177°C) to about 400°F (204°C). Roll 34 is an unheated rubber roll. Following commencement of the process, the temperature of roll 34 increases by means of conduction of heat through the layers 10, 12 and 14 from roll 32; and reaches a steady state temperature somewhat below that of roll 32.

After the three layer structure leaves contact with heated roll 32 it is passed over one or more cooling rolls 36 which are maintained at about 70°F (21°C), to cool the structure and thus ensure the setting and permanence of the bond between the layers 12 and 14.

In the third and final step, a film of biaxially oriented polymer 18 is adhesively laminated to the foil in known manner. The biaxially oriented polymer is adhered to the opposite surface to that to which the modified polypropylene is bonded.

EXAMPLE 1

A two layer film was cast coextruded on conventional extrusion equipment at a die temperature of 500°F (260°C) and chill roll temperature of 80°F (27°C) and wound up. The film was, by weight, 10% Admer QF-500 and 90% Hercules SA-752 propylene ethylene copolymer, and was 3 mil thick (0.08 mm).

The coextruded film was unrolled and pulled into the hot nip between a heated steel roll 24 inches in diameter (61 cm) and an unheated rubber roll 6 inches in diameter (15.2 cm), the film on the incoming side of the nip wrapping the rubber roll, and the SA-752 propylene ethylene layer being in contact with rubber roll 34. Aluminium foil 0.0005 inches thick (0.013 mm) was pulled into the nip, the foil on the incoming side of the nip wrapping the heated steel roll 32. The foil was pressed against the Admer layer with a pressure of approximately 40 pounds of force per square inch (2.81 kg/sq. cm). The temperature of the hot roll was $390^{o}F$ ($199^{o}C$) at the start of the run and gradually dropped to $360^{o}F$ ($182^{o}C$) and remained steady. Line speed through the nip was 20 feet per minute (0.1 m/sec). The three layer structure was in contact with the hot roll for a distance of 24 inches (61 cm) giving approximately 6 seconds of contact time, when the three layer structure was in contact with the hot roll. The three layer structure was subsequently passed over 2 cooling rolls 6 inches in diameter (15.2 cm), the cooling rolls being maintained at about $70^{o}F$ ($21^{o}C$).

EXAMPLE 2

A three layer structure was made the same as in EXAMPLE 1 except the line speed through the hot nip in the process of constructing the three layer structure was 30 feet per minute (0.15 m/sec).

## EXAMPLE 3

A three layer structure was made the same as in EXAMPLE 1 except the line speed through the hot nip in the process of constructing the three layer structure was 40 feet per minute (0.2 m/sec).

## EXAMPLE 4

A three layer structure was made the same as in EXAMPLE 1 except the line speed through the hot nip in the process of constructing the three layer structure was 50 feet per minute (0.25 m/sec).

Table 1 shows the adhesion at the interface between the coextruded film and the foil for the 3-layer films in each of the four examples. The adhesion is measured as peel strength in pounds per 1/2 inch (12.7 mm) width strip. The figures in parentheses in Table 1 are the gram equivalents for measurements on these 12.7 mm wide test strips.

In preparing specimens for the peel test, aluminium foil coated with ethylene acrylic acid was heat sealed to the foil side of the 3-layer structure. The material was cut into 1/2 inch (12.7 mm) widths and tested in a Chatillon tester, manufactured by John Chatillon and Sons, New York. The cross head speed was 10 inches per minute (0.42 cm/sec).

TABLE 1

| Example No. | Peel Strength | |
|---|---|---|
| | Pounds | Grams |
| 1 | 1.7 | (771) |
| 2 | 1.2 | (544) |
| 3 | 1.1 | (499) |
| 4 | 0.9 | (408) |

Using the 3-layer structure of EXAMPLE 1, the uncoated side of the foil was adhesively laminated to a 48 gauge biaxially oriented polyester film, using a polyester urethane adhesive sold by Morton Chemical Company as Adcote 550. The resulting 5-layer structure (this adhesive counting as one layer) was used to make retort pouches. The pouches were filled with food, sealed, and heated under retort conditions at 115°C for 15 minutes. Adhesion values at the interface between the foil and the coextrusion were measured in the 5-layer structure, both before and after the retort processing. These tests were performed on one inch (25.4 mm) strips of the 5-layer structure without prior modification of the 5-layer structure. The tests were performed on an Instrom Tensile Tester at a cross head speed of 10 inches per minute (0.42 cm/sec).

The results showed peel strengths of 1.7 pounds
(771 grams) before retort processing and 2.8 pounds
(1270 grams) after retort processing.

The heat applied by the retort process is
concluded to be responsible for the increased level of
adhesion after the retort processing.  Table 1
indicates that levels of adhesion may also be controlled
by the line speed of the combining operation of FIGURE 3.

The organic acid anhydride may be any compound
capable of being grafted to polypropylene by a suitable
radical reaction initiator such as the organic
peroxides, for example, benzoyl peroxide.

Thus it is seen that the number of processing
steps required in making a laminate suitable for use
in retort pouches is reduced.  Further the handling of
unsupported metal foil is limited to its path of travel
between its unwinding station and the laminating
station when it is combined with the coextruded film
at the hot nip in the second step of the process.  Also
the total number of layers in the laminate is reduced
from a conventional six layers to five layers, thus
achieving a degree of structural simplicity.

Claims:

1. A process for making a multi-layer packaging material characterised by the steps of coextruding a plural layer film from a first layer comprising a polyolefinic material modified with a fused ring acid anhydride and an adjoining second, layer of polyolefinic material layer; drawing the coextruded film and an unprimed metal e.g. aluminium foil into and through a nip between rolls, with the modified polyolefinic layer being in face-to-face relation with the foil; and applying heat and pressure for a duration adequate to adhere the foil to the coextruded film at the interface between the foil and the modified polyolefinic layer, the pressure being applied at the nip, and heat being applied during contact of the multiple material with the rolls.

2. A process according to claim 1, characterised by the acid anhydride being maleic anhydride.

3. A process according to claim 1 or claim 2, further characterised by subsequently heating the interface between the foil and the modified polyolefinic layer to at least 100°C for at least 5 minutes, to strengthen adhesion between the foil and the modified polyolefinic layer.

4. A process according to claim 1, 2 or 3, wherein the polyolefine in the modified polyolefinic first layer is a copolymer of propylene and ethylene containing up to 8% ethylene.

5. A process according to claim 1, 2, 3 or 4, wherein the polyolefine in the second layer is a copolymer of propylene and ethylene containing up to 8% ethylene.

6. A process according to any of claims 1 to 5, further characterised by the additional step of adhesively laminating a biaxially oriented, abuse resistant, polymeric film to the surface of the foil opposite to that surface thereof to which the anhydride modified polyolefinic layer is adhered.

7. A packaging process comprising the steps of producing a multi-layer structure subsequently as claimed in claim 6, forming a pouch from the multi-layer structure, introducing a product into the pouch, closing and sealing the pouch, and heating the filled and sealed pouch under retort conditions of at least 100°C for at least 5 minutes, thereby to increase the strength of adhesion between the foil and the modified polyolefinic first layer.

8. A multi-layer packaging structure wherein the layers are interfacially adhered one to another, characterised by the layers in order comprising a biaxially oriented, abuse resistant layer (18), an adhesive layer (16), metal foil (14), a polyolefine layer (12) modified with a fused ring organic acid anhydride and a polyolefine seal layer (10).

9. A packaging structure according to claim 8, characterised in that the said modified polyolefine layer (12) contains by weight up to 8 percent ethylene moieties and/or in that the said polyolefine layer (10) contains by weight up to 8 percent ethylene moieties.

10. A packaging structure according to claim 8 or claim 9, characterised by the acid anhydride in the layer (12) being maleic anhydride.

FIG.1

FIG.2

FIG.3